# EUROPÄISCHE PATENTANMELDUNG

(11) **EP 4 793 829 A1**
(43) Veröffentlichungstag der Anmeldung: **19.08.2026**
(21) Anmeldenummer: 25158382.9
(22) Anmeldetag: 17.02.2025
(51) Int. Cl.: G06N 3/045, G06N 3/082, G06N 3/09, G06N 3/096, G06N 3/098, G06N 3/0985

(54) **VERFAHREN ZUM AUSWÄHLEN EINER KONFIGURATION FÜR EIN MASCHINELLES LERNMODELL**

(71) Anmelder: Robert Bosch GmbH, 70442 Stuttgart (DE)
(72) Erfinder: Carstensen, Timur, 72072 Tübingen (DE); Mallik, Neeratyoy, 79098 Freiburg im Breisgau (DE); Schott, Lukas, 70178 Stuttgart (DE); Rapp, Martin, 73728 Esslingen Am Neckar (DE); Hutter, Frank, 79110 Freiburg im Breisgau (DE)

(57) **Zusammenfassung**

Verschiedene Ausführungsformen betreffen ein Verfahren zum Auswählen einer Konfiguration für ein maschinelles Lernmodell, das zum Steuern eines technischen Systems verwendet werden soll, das Verfahren aufweisend: Bereitstellen einer Vielzahl von maschinellen Lernmodellen, von denen jedes eine von den anderen maschinellen Lernmodellen verschiedene Konfiguration aufweist und eine jeweilige Vielzahl von aufeinanderfolgenden Schichten mit ein oder mehreren ersten aufeinanderfolgenden Schichten und ein oder mehreren zweiten aufeinanderfolgenden Schichten aufweist; Trainieren eines jeden maschinellen Lernmodells der Vielzahl von maschinellen Lernmodellen unter Verwendung von Trainingsdaten, welche Sensordaten des technischen Systems als Eingabedaten und zugehörige Grundwahrheitsdaten aufweisen, wobei beim Trainieren eines jeweiligen maschinellen Lernmodells der Vielzahl von maschinellen Lernmodellen mindestens ein lernbarer Modellparameter der ein oder mehreren ersten aufeinanderfolgenden Schichten der jeweiligen Vielzahl von aufeinanderfolgenden Schichten nicht adaptiert wird; und Auswählen der Konfiguration des trainierten maschinellen Lernmodells mit der größten Leistungsfähigkeit als Konfiguration für das maschinelle Lernmodell, das zum Steuern des technischen Systems verwendet werden soll.

## Beschreibung

### Stand der Technik

Allgemein können maschinelle Lernmodelle für verschiedenstes Aufgaben beim Steuern technischer System eingesetzt werden, wie beispielsweise zum Klassifizieren von Sensordaten (z.B. als Bildklassifikator), zum Ermitteln von Trajektorien (z.B. von Roboterarmen, des Roboters selbst, etc.), zum Sicherstellen von Sicherheitsbedingungen, zum Erkennen von Anomalien und/oder Fehlern, etc. Allerdings gibt es mittlerweile eine große Anzahl verschiedener neuronaler Architekturen maschineller Lernmodelle und jede neuronale Architektur kann mit einer Vielzahl verschiedener Hyperparameter (wie beispielsweise einer Lernrate, einer Reduzierung der Gewichtungen, einer Dropout-Rate, Gewichtungsfaktoren der Fehlerfunktion, etc.) trainiert werden. Je nach technischen System und auszuführender Aufgabe kann eine andere neuronale Architektur eines maschinellen Lernmodells und/oder andere Hyperparameter zum Trainieren des maschinellen Lernmodells geeignet sein (also beispielsweise eine höhere Leistungsfähigkeit haben als andere neuronale Architekturen).

Daher kann im Rahmen einer Suche nach einer neuronalen Architektur (engl.: neural architecture search, NAS) eine geeignete neuronale Architektur für eine bestimmte Aufgabe beim Steuern eines technischen Systems ermittelt werden. Im Rahmen einer Hyperparameteroptimierung können geeignete Hyperparameter für eine bestimmte neuronale Architektur ermittelt werden. Allerdings kann der Suchraum, in welchem die geeignete neuronale Architektur gesucht wird, eine Anzahl von ungefähr 10⁶ bis ungefähr 10²⁰ neuronale Architekturen aufweisen. Der Suchraum der Hyperparameteroptimierung kann in einem Bereich von ungefähr 2 bis ungefähr 5 diskreten oder kontinuierlichen Hyperparametern liegen. Würde für jede neuronale Architektur ein jeweiliges maschinelles Lernmodell vollständig (also bis zur Konvergenz) trainiert werden, würde dies einen enormen Bedarf an Rechenressourcen erfordern. Wie beispielsweise in K. Jamieson et al.: "Non-stochastic Best Arm Identification and Hyperparameter Optimization", arXiv:1502.07943, 2015 beschrieben kann der Rechenaufwand verringert werden, indem für jede neuronale Architektur ein jeweiliges maschinelles Lernmodell nur für eine vergleichsweise kurze Zeit trainiert wird (um Schätzungen geringerer Genauigkeit über die potentielle Leistungsfähigkeit des jeweiligen maschinellen Lernmodells zu erhalten) und anschließend nur die vielversprechendsten maschinellen Lernmodelle weitertrainiert werden. Dies wird auch als Multi-Genauigkeits-Leistungsfähigkeits-Schätzungsansatz (engl.: multi-fidelity performance estimation) bezeichnet. Allerdings ist der für die Suche nach der neuronalen Architektur und/oder Hyperparameteroptimierung erforderliche Rechenaufwand weiterhin sehr hoch.

### Offenbarung der Erfindung

Die vorliegende Offenbarung bezieht sich auf ein Verfahren zum Auswählen einer Konfiguration für ein maschinelles Lernmodell, das zum Steuern eines technischen Systems verwendet werden soll. Das Verfahren ermöglicht die Auswahl der Konfiguration mit einem signifikant verringerten Rechenaufwand. Dies wird beispielsweise dadurch erreicht, dass der zum Trainieren eines maschinellen Lernmodelle erforderliche Speicherbedarf derart verringert wird, dass mehrere maschinelle Lernmodelle (von einem Grafikprozessor, GPU) gleichzeitig trainiert werden können, wodurch die zum Trainieren aller maschinellen Lernmodelle erforderliche Zeitdauer (und damit der Rechenaufwand) signifikant verringert wird. Der verringerte Speicherbedarf wird dadurch erreicht, dass nicht alle Schichten des maschinellen Lernmodells trainiert werden, sondern nur die letzten ein oder mehreren Schichten.

Es hat sich gezeigt, dass das Trainieren der letzten ein oder mehreren Schichten ausreicht, um eine Schätzung (niedriger Genauigkeit) über die potentielle Leistungsfähigkeit des maschinellen Lernmodells ermitteln zu können. Beispielsweise kann anhand dieser Schätzung das Training der vielversprechendsten maschinellen Lernmodelle gemäß des Multi-Genauigkeits-Leistungsfähigkeits-Schätzungsansatzes fortgesetzt werden.

Verschiedene Aspekte betreffen ein (computerimplementiertes) Verfahren zum Auswählen einer Konfiguration für ein maschinelles Lernmodell, das zum Steuern eines technischen Systems verwendet werden soll, das Verfahren aufweisend: Bereitstellen (z.B. Vorauswählen) einer Vielzahl von maschinellen Lernmodellen, von denen jedes maschinelle Lernmodell eine von den anderen maschinellen Lernmodellen der Vielzahl von maschinellen Lernmodellen verschiedene Konfiguration (z.B. eine andere Modellarchitektur und/oder andere Hyperparameter) aufweist und von denen jedes maschinelle Lernmodell eine jeweilige Vielzahl von aufeinanderfolgenden Schichten mit ein oder mehreren ersten aufeinanderfolgenden Schichten und mit auf die ein oder mehreren ersten aufeinanderfolgenden Schichten (z.B. direkt) folgenden ein oder mehreren zweiten aufeinanderfolgenden Schichten aufweist; Trainieren eines jeden maschinellen Lernmodells der Vielzahl von maschinellen Lernmodellen (für eine vordefinierte Zeitdauer oder eine vordefinierte Anzahl an Trainingsiterationen) unter Verwendung von (gleichen) Trainingsdaten, welche Sensordaten des technischen Systems als Eingabedaten und zugehörige Grundwahrheitsdaten aufweisen, wobei beim Trainieren eines jeweiligen maschinellen Lernmodells der Vielzahl von maschinellen Lernmodellen mindestens ein lernbarer Modellparameter der ein oder mehreren ersten aufeinanderfolgenden Schichten der jeweiligen Vielzahl von aufeinanderfolgenden Schichten nicht adaptiert wird; und (anschließend) Auswählen der Konfiguration des trainierten maschinellen Lernmodells mit der größten (z.B. geschätzten) Leistungsfähigkeit als Konfiguration für das maschinelle Lernmodell, das zum Steuern des technischen Systems verwendet werden soll.

Im Folgenden werden verschiedene Ausführungsbeispiele angegeben.

Beispiel 1 ist das Verfahren zum Auswählen einer Konfiguration für ein maschinelles Lernmodell, das zum Steuern eines technischen Systems verwendet werden soll, wie voranstehend beschrieben.

Beispiel 2 ist eingerichtet gemäß Beispiel 1, wobei beim Trainieren der Vielzahl von maschinellen Lernmodellen mehrere maschinelle Lernmodelle der Vielzahl von maschinellen Lernmodellen gleichzeitig mittels eines (z.B. Grafik-) Prozessors trainiert werden.

Da zum Trainieren eines jeweiligen maschinellen Lernmodells verringerte Speicherressourcen erforderlich sind, können bei gleichbleibender Speicherkapazität mehrere maschinelle Lernmodelle gleichzeitig (also zeitgleich) trainiert werden, wodurch die zum Trainieren aller maschinellen Lernmodelle erforderliche Zeitdauer (und damit der Rechenaufwand) signifikant verringert wird.

In Beispiel 3 kann das Verfahren gemäß Beispiel 1 oder 2 optional ferner aufweisen: nach dem Trainieren eines jeden maschinellen Lernmodells der Vielzahl von maschinellen Lernmodellen, Auswählen mehrerer maschineller Lernmodelle der Vielzahl von maschinellen Lernmodellen, welche eine größere Leistungsfähigkeit als die anderen maschinellen Lernmodelle der Vielzahl von maschinellen Lernmodellen haben; und zusätzliches Trainieren eines jeden maschinellen Lernmodells der mehreren maschinellen Lernmodelle (für eine vordefinierte Zeitdauer oder eine vordefinierte Anzahl an Trainingsiterationen).

Anschaulich kann das Verfahren einen Multi-Genauigkeits-Leistungsfähigkeits-Schätzungsansatz verfolgen, bei welchem zuerst alle maschinellen Lernmodelle für vergleichsweise kurze Zeit trainiert werden, um eine Leistungsfähigkeit niedriger Genauigkeit zu erhalten (z.B. unter Verwendung einer Extrapolation einer jeweiligen Lernkurve zur Schätzung einer zukünftigen Genauigkeit des jeweiligen maschinellen Lernmodells), und bei welchem anschließend nur die maschinellen Lernmodelle mit der höchsten Genauigkeit weiter trainiert werden. Dies kann den Rechenaufwand und damit die zum Trainieren aller maschinellen Lernmodelle erforderliche Zeitdauer zusätzlich verringern.

Beispiel 4 ist eingerichtet gemäß einem der Beispiele 1 bis 3, wobei beim Trainieren des jeweiligen maschinellen Lernmodells die ein oder mehreren ersten aufeinanderfolgenden Schichten der jeweiligen Vielzahl von aufeinanderfolgenden Schichten nicht adaptiert werden.

In Beispiel 5 kann das Verfahren gemäß einem der Beispiele 1 bis 4 optional ferner aufweisen: vor dem Trainieren des jeweiligen maschinellen Lernmodells, Quantisieren der ein oder mehreren ersten aufeinanderfolgenden Schichten des jeweiligen maschinellen Lernmodells.

Beim Quantisieren wird die Genauigkeit der Modellparameter (z.B. der Gewichtungen, die Bias, die Aktivierungen, etc.) verringert (beispielsweise von einer 32-Bit-Fließkommazahlen zu einer 8-Bit-Ganzzahl), wodurch die zum Trainieren der maschinellen Lernmodelle erforderlichen Speicherressourcen zusätzlich verringert werden.

Beispiel 6 ist eingerichtet gemäß einem der Beispiele 1 bis 5, wobei die ein oder mehreren zweiten aufeinanderfolgenden Schichten der jeweiligen Vielzahl von aufeinanderfolgenden Schichten ein oder mehrere aufeinanderfolgende Schichten aufweisen, von denen eine direkt auf eine letzte Schicht der ein oder mehreren ersten aufeinanderfolgenden Schichten folgt; und wobei beim Trainieren des jeweiligen maschinellen Lernmodells die ein oder mehreren aufeinanderfolgende Schichten unter Verwendung eines parameter-effizienten Feinabstimmungsverfahrens trainiert werden.

Beispiel 7 ist eingerichtet gemäß Beispielen 3 und 6, wobei beim zusätzlichen Trainieren eines jeweiligen maschinellen Lernmodells der mehreren maschinellen Lernmodelle alle Modellparameter der ein oder mehreren aufeinanderfolgenden Schichten adaptiert werden.

Gemäß Beispiel 6 können beispielsweise die ein oder mehreren ersten aufeinanderfolgenden Schicht gar nicht trainiert werden, also deren Modellparameter können eingefroren sein, und ein erster Abschnitt der ein oder mehreren zweiten aufeinanderfolgenden Schichten kann unter Verwendung eines parameter-effizienten Feinabstimmungsverfahrens trainiert werden, wodurch die zum Trainieren erforderlichen Rechenressourcen verringert werden. Gemäß Beispiel 7 kann dieser erste Abschnitt der ein oder mehreren zweiten aufeinanderfolgenden Schichten dann vollständig trainiert werden, also alle Modellparameter davon. Es wird verstanden, dass bei parameter-effizienten Feinabstimmungsverfahren nicht alle Modellparameter des maschinellen Lernmodells, sondern eine geringere Anzahl (zusätzlicher) Modellparameter trainiert wird.

Beispiel 8 ist eingerichtet gemäß einem der Beispiele 1 bis 7, wobei sich die Konfiguration eines jeweiligen maschinellen Lernmodells von der Konfiguration der anderen maschinellen Lernmodelle der Vielzahl von maschinellen Lernmodellen bezüglich der neuronalen Architektur und/oder der Trainings-Hyperparameter unterscheidet.

Anschaulich kann das Verfahren eine Suche nach einer neuronalen Architektur und/oder eine Hyperparameteroptimierung bereitstellen.

Beispiel 9 ist eingerichtet gemäß einem der Beispiele 1 bis 8, wobei jedes maschinelle Lernmodell der Vielzahl von maschinellen Lernmodellen ein (z.B. Bild-) Klassifikator ist.

Anschaulich kann das maschinelle Lernmodell, das zum Steuern eines technischen Systems verwendet werden soll, ein Klassifikator sein, wie beispielsweise ein Bildklassifikator zur Erkennung von Objekten in der Umgebung des technischen Systems.

Beispiel 10 ist ein Verfahren zum Steuern eines technischen System, das Verfahren aufweisend: Erfassen von Sensordaten, welche das technische System oder eine Umgebung dessen repräsentieren; Eingeben der Sensordaten in ein maschinelles Lernmodell, dessen Konfiguration mittels des Verfahrens gemäß einem der Beispiele 1 bis 9 ausgewählt wurde, zum Ermitteln einer (zugehörigen) Ausgabe; und Steuern des technischen System unter Verwendung der Ausgabe.

Beispiel 11 ist eine Steuervorrichtung, die eingerichtet ist, das Verfahren gemäß Beispiel 10 auszuführen.

Beispiel 12 ist eine Robotervorrichtung, welche die Steuervorrichtung gemäß Beispiel 11 aufweist.

Beispiel 13 ist eine Datenverarbeitungseinheit, die eingerichtet ist, das Verfahren gemäß einem der Beispiele 1 bis 9 auszuführen.

Beispiel 14 ist ein Computerprogramm mit Befehlen, die, wenn sie durch einen Prozessor ausgeführt werden, bewirken, dass der Prozessor das Verfahren gemäß einem der Beispiele 1 bis 10 durchführt.

Beispiel 15 ist ein computerlesbares Medium, das Befehle speichert, die, wenn sie durch einen Prozessor ausgeführt werden, bewirken, dass der Prozessor das Verfahren gemäß einem der Beispiele 1 bis 10 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
Figur 1 zeigt eine Robotervorrichtungsanordnung gemäß verschiedenen Aspekten;
Figur 2 zeigt ein Ablaufdiagramm eines Verfahrens zum Auswählen einer Konfiguration für ein maschinelles Lernmodell gemäß verschiedenen Aspekten; und
Figuren 3 und 4 zeigen verschiedene Aspekte des Verfahrens zum Auswählen der Konfiguration gemäß verschiedenen Aspekten.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

Zur Veranschaulichung wird im Folgenden beispielhaft eine Robotervorrichtung als technisches System beschrieben, bei welcher ein Roboterarm 120 unter Verwendung mindestens eines maschinellen Lernmodells gesteuert wird. Es wird verstanden, dass diese Robotervorrichtung ein beispielhaftes technisches System ist und dass dieses auch jede andere Art von computergesteuerter Vorrichtung sein kann, die unter Verwendung mindestens eines maschinellen Lernmodells gesteuert wird, wie beispielsweise ein Roboter (z.B. ein Fertigungsroboter, ein Wartungsroboter, ein Haushaltsroboter, ein Medizinroboter, etc.), ein Fahrzeug (z.B. ein zumindest teilweise automatisiertes Fahrzeug), ein Haushaltsgerät, eine Produktionsmaschine, ein persönlicher Assistent, ein Zugangs-Steuerungs-System, etc.

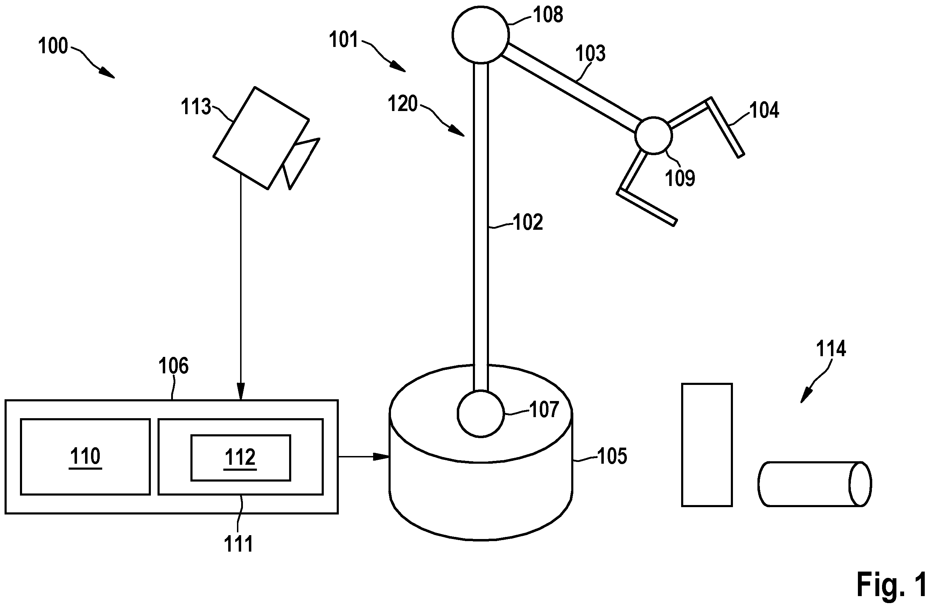

**FIG.1** zeigt eine Robotervorrichtungsanordnung 100 gemäß verschiedenen Aspekten. Die Robotervorrichtungsanordnung 100 kann eine Robotervorrichtung 101 (kurz: Roboter) aufweisen. Die in FIG. 1 gezeigte und im Folgenden beispielhaft beschriebene Robotervorrichtung 101 stellt zur Veranschaulichung eine beispielhafte Robotervorrichtung dar und kann zum Beispiel einen Industrieroboter in der Form eines Roboterarms zum Bewegen, Montieren oder Bearbeiten eines Werkstücks, zur Teilentnahme (engl.: bin picking), etc. aufweisen.

Die Robotervorrichtung 101 kann einen Roboterarm 120 aufweisen. Der Roboterarm 120 kann Roboterglieder 102, 103, 104 und einen Sockel (oder allgemein eine Halterung) 105 aufweisen, durch welche die Roboterglieder 102, 103, 104 getragen werden. Der Begriff "Roboterglieder " kann sich auf die beweglichen Teile der Robotervorrichtung 101 beziehen, deren Betätigung eine physische Interaktion mit der Umgebung ermöglicht, um beispielsweise eine Aufgabe auszuführen, z.B. um ein oder mehrere Fertigkeiten auszuführen bzw. durchzuführen.

Zur Steuerung der Robotervorrichtung 101 kann die Robotervorrichtungsanordnung 100 eine (Roboter) Steuervorrichtung 106 aufweisen, die eingerichtet ist, die Interaktion mit der Umgebung gemäß einem Steuerungsprogramm zu realisieren. Das letzte Element 104 (von dem Sockel 105 aus gesehen) der Roboterglieder 102, 103, 104 wird auch als Endeffektor 104 bezeichnet. Die Art des Endeffektors 104 kann festlegen, ob die Robotervorrichtung 101 imstande ist, greifende und/oder nicht-greifende Objektmanipulationen durchzuführen. Eine greifende Objektmanipulation kann sich auf eine Manipulation eines Objekts beziehen, bei der das Objekt gegriffen wird, wohingegen sich eine nicht-greifende Objektmanipulation auf eine Manipulation eines Objekts beziehen kann, bei der das Objekt nicht gegriffen wird. Folglich kann die Robotervorrichtung 101 zur greifenden Objektmanipulation fähig sein, wenn der Endeffektor 104 mindestens ein Greifwerkzeug (bei dem es sich auch um eine Ansaugvorrichtung (z.B. einen Saugkopf) oder dergleichen handeln kann) aufweist. In jedem Fall kann die Robotervorrichtung 101 zur nicht-greifenden Objektmanipulation fähig sein, beispielsweise indem das Objekt (ohne es zu greifen) geschoben wird, um zum Beispiel dessen laterale Position und/oder Orientierung zu ändern.

Die anderen Roboterglieder 102, 103 (näher am Sockel 105) können eine Positionierungsvorrichtung bilden, so dass zusammen mit dem Endeffektor 104 ein Roboterarm 120 (oder Gelenkarm) mit dem Endeffektor 104 an seinem Ende vorgesehen ist. Der Roboterarm 120 kann ein mechanischer Arm sein, der ähnliche Funktionen wie ein menschlicher Arm erfüllen kann (möglicherweise mit einem Werkzeug an seinem Ende).

Der Roboterarm 120 kann Verbindungselemente 107, 108, 109 aufweisen, welche die Roboterglieder 102, 103, 104 miteinander und mit dem Sockel 105 verbinden. Ein Verbindungselement 107, 108, 109 kann ein oder mehrere Gelenke aufweisen, von denen jedes eine Drehbewegung und/oder eine Translationsbewegung (d.h. eine Verschiebung) für zugehörige Roboterglieder relativ zueinander bereitstellen kann. Die Bewegung der Roboterglieder 102, 103, 104 kann mit Hilfe von Stellgliedern eingeleitet werden, die von der Steuervorrichtung 106 gesteuert werden.

Der Begriff "Stellglied" kann als eine Komponente verstanden werden, die geeignet ist, als Reaktion darauf, dass sie angetrieben wird, einen Mechanismus zu beeinflussen. Das Stellglied kann von der Steuervorrichtung 106 ausgegebene Anweisungen (die sogenannte Aktivierung) in mechanische Bewegungen umsetzen. Das Stellglied, z.B. ein elektromechanischer Wandler, kann eingerichtet werden, elektrische Energie als Reaktion auf seine Ansteuerung in mechanische Energie umzuwandeln.

Der Begriff "Steuervorrichtung" (auch als "Steuereinrichtung" bezeichnet) kann als jede Art von logischer Implementierungseinheit verstanden werden, die beispielsweise eine Schaltung und/oder einen Prozessor beinhalten kann, der in der Lage ist, in einem Speichermedium gespeicherte Software, Firmware oder eine Kombination derselben auszuführen, und die Anweisungen, z.B. an ein Stellglied im vorliegenden Beispiel, erteilen kann. Die Steuervorrichtung kann beispielsweise durch Programmcode (z.B. Software) eingerichtet werden, den Betrieb eines Systems, im vorliegenden Beispiel eines Roboters, zu steuern.

In dem vorliegenden Beispiel kann die Steuervorrichtung 106 einen Computer 110 und einen Speicher 111, der Code und Daten speichert, auf deren Grundlage der Computer 110 die Robotervorrichtung 101 steuert, aufweisen. Gemäß verschiedener Ausführungsformen kann die Steuervorrichtung 106 die Robotervorrichtung 101 auf der Grundlage eines im Speicher 111 gespeicherten Roboter-Steuerungsmodells 112 steuern.

Als ein Beispiel kann die (greifende) Aufgabe der Robotervorrichtung 101 eine Teilentnahme sein, also ein Aufnehmen (z.B. Greifen oder Ansaugen) eines Objekts von ein oder mehreren Objekten 114 und ein Bewegen des aufgenommenen Objekts (z.B. zu einem Scanner, in einen anderen Behälter, etc.). Um das aufzunehmende Objekt und eine geeignete Greifposition auf dem Objekt bestimmen zu können, kann die Steuervorrichtung 106 Bilder des Arbeitsbereichs der Robotervorrichtung 101, in dem sich die Objekte 114 befinden, verwenden.

Als ein anderes Beispiel kann die (nicht-greifende) Aufgabe der Robotervorrichtung 101 sein, das Objekt 114 an eine andere Position zu schieben und/oder derart zu schieben, dass sich dessen Orientierung ändert. In diesem Fall können die Bilder des Arbeitsbereichs der Robotervorrichtung 101, in dem sich die Objekte 114 befinden, dazu dienen, eine geeigneten Kontaktposition (an welcher die Robotervorrichtung 101 das Objekt berühren (aber nicht greifen) soll) zu ermitteln.

Diese Bilder der Umgebung der Robotervorrichtung 101 können von einem oder mehreren Bildgebungssensoren 113 geliefert werden (z. B. am Roboterarm 120 angebracht oder auf andere Weise, so dass die Steuervorrichtung 106 den Blickwinkel der ein oder mehreren Bildgebungssensoren 113 steuern kann).

Ein Bildgebungssensor, wie hierin verwendet, kann zum Beispiel eine Kamera (z.B. eine Standardkamera, eine Digitalkamera, eine Infrarotkamera, eine Stereokamera, etc.), ein Radar-Sensor, ein LIDAR-Sensor, ein Ultraschallsensor, etc. sein. Daher kann ein Bild ein RGB-Bild, ein RGB-D-Bild oder ein Tiefenbild (auch als D-Bild bezeichnet) sein. Ein hierin beschriebenes Tiefenbild kann jede Art von Bild sein, das Tiefeninformationen aufweist. Anschaulich kann ein Tiefenbild 3-dimensionale Informationen zu ein oder mehreren Objekten aufweisen. Ein hierin beschriebenes Tiefenbild kann zum Beispiel eine Punktwolke aufweisen, die von einem LIDAR-Sensor und/oder einem Radar-Sensor bereitgestellt wird. Ein Tiefenbild kann zum Beispiel ein von einem LIDAR-Sensor bereitgestelltes Bild mit Tiefeninformationen sein.

Die Steuervorrichtung 106 kann eingerichtet sein, den Roboterarm 120 in Reaktion auf eine Eingabe eines Bildes in das Roboter-Steuerungsmodells 112 basierend auf einer Ausgabe des Roboter-Steuerungsmodells 112 zu steuern.

Das Roboter-Steuerungsmodells 112 kann ein oder auch mehr als ein maschinelles Lernmodell aufweisen. In einem Beispiel kann das maschinelle Lernmodell ein Bildklassifikator zum Klassifizieren des Bildes sein, zum Beispiel zur Objekterkennung und/oder zur Erkennung Anomalien und/oder Fehlern. In einem anderen Beispiel kann das maschinelle Lernmodell eine Trajektorie zum Bewegen des Roboterarms 120 und/oder eine Konfiguration zum Aufnehmen (z.B. Greifen) eines (erkannten) Objekts ermitteln. Es wird verstanden, dass dies Beispiele sind und dass maschinelle Lernmodelle für zahlreiche verschiedene (Teil-) Aufgaben beim Steuern der Robotervorrichtung 101 und noch mehr verschiedene (Teil-) Aufgaben beim Steuern aller möglichen technischen Systeme verwendet werden kann.

Im Folgenden werden verschiedene Aspekte zur Auswahl der Konfiguration des maschinellen Lernmodells, das zum Steuern eines technischen Systems verwendet werden soll, beschrieben.

Die Auswahl der Konfiguration kann eine Suche nach einer neuronalen Architektur und/oder eine Hyperparameteroptimierung sein. Folglich kann die Konfiguration eines maschinellen Lernmodells, wie hierin verwendet, Hyperparameter einer neuronalen Architektur (also einer Modellarchitektur) und/oder ein oder mehrere Trainings-Hyperparameter repräsentieren.

Hyperparameter einer neuronalen Architektur eines maschinellen Lernmodells sind beispielsweise: einer Art des maschinellen Lernmodells, eine Anzahl an (aufeinanderfolgenden) Schichten des maschinellen Lernmodell, eine Konfiguration der Schichten (z.B. Berechnungsart, einer Anzahl der Filter, einer Größe der Einbettung, etc.), die Verbindungen zwischen den Schichten (z.B. welche Schichten erzeugen die Eingabe für welche andere Schicht), etc.

Die Art des maschinellen Lernmodells kann beispielsweise angeben, ob es ich um ein bestärkendes-Lernen-Modell (engl.: reinforcement learning model) (z. B. unter Verwendung von Q-Learning, Temporal Difference (TD), Deep Adversarial Networks usw.), ein Transformer-Modell, oder ein Klassifizierungsmodell (z. B. ein neuronales Netzwerk) handelt. Die Art des maschinellen Lernmodells kann im Falle eines neuronalen Netzwerkes die Art des neuronalen Netzwerkes angeben, wie beispielsweise ob es sich um ein neuronales Faltungsnetzwerk (engl.: convolutional neural network, CNN), ein Variations-Autoencoder-Netzwerk (engl.: variational autoencoder network, VAE), ein Ausgedünntes Autoencoder-Netzwerk (engl.: sparse autoencoder network, SAE), ein rekurrentes neuroanales Netzwerk (RNN), ein neuronales Entfaltungsnetzwerk (engl.: deconvolutional neural network, DNN), ein generatives gegnerisches Netzwerk (engl. generative adversarial), ein vorausschauendes neuronales Netzwerk (engl.: forward-thinking neural network), ein neuronales Summenprodukt-Netzwerk (engl.: sum-product neural network), etc. handelt

Trainings-Hyperparameter zum Trainieren eines maschinellen Lernmodells sind beispielsweise: eine Lernrate, ein Momentum, einer Reduzierung der Gewichtungen (engl.: weight decay), einer Dropout-Rate, einer Batch-Größe, Gewichtungsfaktoren der Fehlerfunktion, etc.

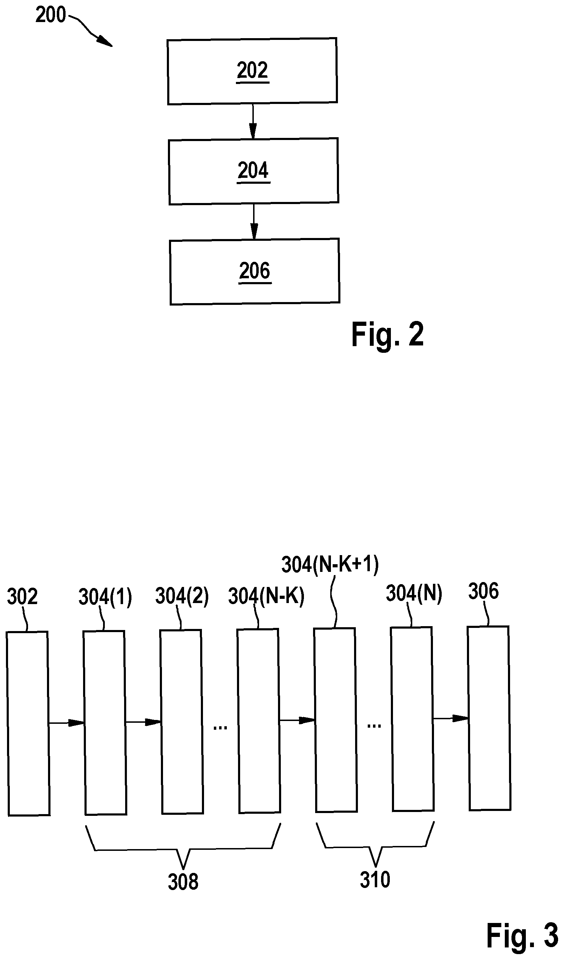

**FIG.2** zeigt ein Ablaufdiagramm eines (computerimplementierten) Verfahrens 200 zum Auswählen einer Konfiguration für ein maschinelles Lernmodell, das zum Steuern eines technischen Systems verwendet werden soll, gemäß verschiedenen Aspekten.

Das Verfahren 200 kann (in 202) ein Bereitstellen einer Vielzahl von maschinellen Lernmodellen aufweisen, von denen jedes maschinelle Lernmodell eine von den anderen maschinellen Lernmodellen der Vielzahl von maschinellen Lernmodellen verschiedene Konfiguration aufweist und von denen jedes maschinelle Lernmodell eine jeweilige Vielzahl von aufeinanderfolgenden Schichten mit ein oder mehreren ersten aufeinanderfolgenden Schichten und mit auf die ein oder mehreren ersten aufeinanderfolgenden Schichten (z.B. direkt) folgenden ein oder mehreren zweiten aufeinanderfolgenden Schichten aufweist.

Das Verfahren 200 kann (in 204) ein Trainieren eines jeden maschinellen Lernmodells der Vielzahl von maschinellen Lernmodellen (für eine vordefinierte Zeitdauer oder eine vordefinierte Anzahl an Trainingsiterationen) unter Verwendung von (gleichen) Trainingsdaten, welche Sensordaten des technischen Systems als Eingabedaten und zugehörige Grundwahrheitsdaten aufweisen, aufweisen. Beim Trainieren eines jeweiligen maschinellen Lernmodells der Vielzahl von maschinellen Lernmodellen kann mindestens ein lernbarer Modellparameter (z.B. alle lernbaren Modellparameter) der ein oder mehreren ersten aufeinanderfolgenden Schichten der jeweiligen Vielzahl von aufeinanderfolgenden Schichten nicht adaptiert werden.

Anschaulich können die ein oder mehreren ersten aufeinanderfolgenden Schichten des jeweiligen maschinellen Lernmodells zumindest teilweise eingefroren werden.

Das Verfahren 200 kann (anschließend) (in 206) ein Auswählen der Konfiguration des trainierten maschinellen Lernmodells mit der größten (z.B. geschätzten) Leistungsfähigkeit als Konfiguration für das maschinelle Lernmodell, das zum Steuern des technischen Systems verwendet werden soll, aufweisen.

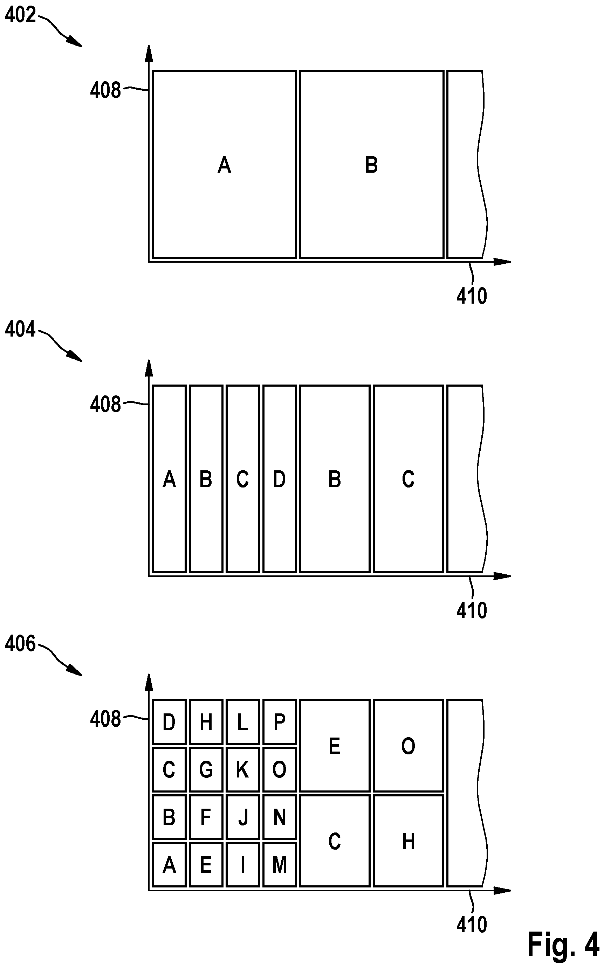

Im Folgenden werden verschiedene Aspekte des Verfahrens 200 mit Bezug auf **FIG.3** und **FIG.4** detaillierter beschrieben.

FIG.3 zeigt schematisch eine Vielzahl von aufeinanderfolgenden Schichten 304(n = 1 bis N) eines beispielhaften maschinellen Lernmodells. Hierbei kann das maschinelle Lernmodell eine Anzahl von N (aufeinanderfolgenden) Schichten aufweisen (wobei N eine Ganzzahl größer als oder gleich zwei ist). Eine vorderste Schicht 304(1) des maschinellen Lernmodells kann eine Eingabe 302 des maschinellen Lernmodells empfangen und eine letzte Schicht 304(N) des maschinellen Lernmodells kann eine Ausgabe 306 des maschinellen Lernmodells ausgeben. Es wird verstanden, dass die in diesem Beispiel gezeigte Architektur der Schichten zur Veranschaulichung dient und dass die Schichten auf jede Art und Weise miteinander gekoppelt sein können (z.B. mittels Skip-Verbindungen).

Gemäß verschiedenen Aspekten werden die *N - K* vordersten Schichten (304(1) bis 304(N-K)) nicht trainiert oder es werden nur manche der Modellparameter dieser *N - K* vordersten Schichten trainiert. Die ein oder mehreren ersten aufeinanderfolgenden Schichten 308 können also die *N - K* vordersten Schichten aufweisen. K kann jede Ganzzahl größer als oder gleich eins sein.

In manchen Aspekten werden die ein oder mehreren ersten aufeinanderfolgenden Schichten 308 gar nicht trainiert (also nicht adaptiert). Anschaulich werden deren Modellparameter (wie beispielsweise deren Gewichtungen, Bias, etc.) eingefroren.

In anderen Aspekten werden nur manche der lernbaren Modellparameter ein oder mehreren ersten aufeinanderfolgenden Schichten 308 trainiert. Anschaulich werden nur manche Modellparameter eingefroren. Beispielsweise im Falle eines neuronalen Faltungsnetzwerkes können die Bias adaptiert werden, aber die Gewichtungen können eingefroren werden, oder andersherum. Beispielsweise im Falle eines Transformer-Modells können die die Köpfe (engl.: heads) der Aufmerksamkeitsschichten trainiert (also adaptiert) werden und die Abfrage- (engl.: query) und/oder Schlüssel- (engl.: key) Matrizen (der linearen Schichten) können eingefroren (also nicht adaptiert) werden, oder andersherum.

Da in beiden Fällen zumindest manche Modellparameter nicht trainiert werden, wird der Speicheraufwand und der Rechenaufwand beim Training signifikant verringert. Beispielsweise ist es nicht erforderlich, für diese Modellparameter einen Gradienten (z.B. bezüglich der Gewichtungen) im Falle der Rückpropagierung zu ermitteln.

Werden die Gewichtungen der ein oder mehreren ersten aufeinanderfolgenden Schichten 308 nicht adaptiert, so behalten diese beispielsweise deren zufällig initialisierte Gewichtungen, welche als Merkmalsextraktoren fungieren und ein vergleichbares induktives Bias wie das vollständig trainierte maschinelle Lernmodell aufweisen können. Daher kann auch in diesem Fall eine Schätzung (niedriger Genauigkeit) bezüglich der Leistungsfähigkeit des vollständig trainierten maschinellen Lernmodells (also, wenn alle N Schichten trainiert werden würden) ermittelt werden.

Werden die ein oder mehreren ersten aufeinanderfolgenden Schichten 308 gar nicht adaptiert, so ist es nicht erforderlich, das von einem Netzwerkknoten berechnete Ergebnis (auch als Zwischenaktivierungen bezeichnet) für eine spätere Rückpropagierung zwischenzuspeichern. Auch ist es für die eingefrorenen Modellparameter nicht erforderlich, einen Optimierungsstatus im Speicher zu halten. Dadurch kann der Speicheraufwand signifikant verringert werden.

Es wird verstanden, dass die maschinellen Lernmodelle der Vielzahl von maschinellen Lernmodellen eine voneinander verschiedene Anzahl N an Schichten aufweisen können. Auch kann sich der Wert von K für die maschinellen Lernmodelle der Vielzahl von maschinellen Lernmodellen voneinander unterscheiden. Es wird verstanden, dass die Genauigkeit der Schätzung mit zunehmendem K steigt, allerdings der Rechenaufwand und Speicheraufwand ebenfalls steigen. Gemäß verschiedenen Aspekten kann das Training mehreren Stufen aufweisen, wobei der Wert von K mit jeder Stufe größer wird (und optional nur eine Teilmenge der maschinellen Lernmodelle weiter trainiert wird). Anschaulich kann die Anzahl an eingefroren Schichten adaptiert (z.B. im Laufe des Trainings in mehreren Stufen verringert) werden.

Gemäß verschiedenen Aspekten kann der Rechenaufwand zusätzlich verringert werden, indem die Anzahl an Iterationen des Trainierens verringert wird.

Gemäß verschiedenen Aspekten können der Speicheraufwand und der Rechenaufwand zusätzlich verringert werden, indem die Modellparameter (z.B. der Gewichtungen, die Bias, die Aktivierungen, etc.) der ein oder mehreren ersten aufeinanderfolgenden Schichten 308 quantisiert werden. Beim Quantisieren wird deren Genauigkeit verringert, beispielsweise von einer 32-Bit-Fließkommazahl zu einer 8-Bit-Ganzzahl. Folglich benötigen diese dann weniger Speicherplatz und das Berechnen der Ausgabe wird beschleunigt, so dass der Rechenaufwand verringert wird. Der Aufwand für das Quantisieren ist einmalig und deutlich geringer als der gesparte Rechen- und Zeitaufwand im nachfolgenden Trainieren. Beispielsweise kann die Quantisierung der Schichten mittels minimaler und maximaler Werte ermittelt werden und/oder durch Minimierung des bei der Berechnung auftretenden propagierten Quantisierungsfehlers.

Wie hierin beschrieben können die ein oder mehreren zweiten aufeinanderfolgenden Schichten 310 (von Schicht 304(N-K+1) bis Schicht 304(N)) der Vielzahl von aufeinanderfolgenden Schichten 304(n = 1 bis N) trainiert, also deren Modellparameter adaptiert, werden.

Gemäß verschiedenen Aspekten können ein oder mehrere der vordersten Schichten (beginnend mit 304(N-K+1)) unter Verwendung eines parameter-effizienten Feinabstimmungsverfahrens (engl.: parameter-efficient finetuning method, PEFT) trainiert werden.

Dies erfordert weniger Rechenaufwand und Speicheraufwand als ein komplettes Training, aber ermöglicht, dass, wenn beispielsweise in einer anderen Stufe des Trainings die Anzahl an K erhöht werden soll und/oder diese ein oder mehreren der vordersten Schichten direkt trainiert werden sollen, die Konvergenz für diese Schichten beschleunigt wird (da bereits Annäherungen für die Modellparameter aufgrund von PEFT vorliegen) und so der Rechenaufwand für das gesamte Training verringert wird. Ein beispielhaftes parameter-effizienten Feinabstimmungsverfahren ist die Niedrig-Rang Adaption (engl.: Low-Rank Adaption, LoRA).

Anschaulich kann das Training wie folgt ablaufen: Zuerst können die Modellparameter der ein oder mehreren ersten aufeinanderfolgenden Schichten 308 eingefroren werden. Optional können diese ferner quantisiert werden. Optional können die ein oder mehreren vordersten Schichten der ein oder mehreren zweiten aufeinanderfolgenden Schichten 310 mittels eines PEFT-Modells repräsentiert werden. Dann können die ein oder mehreren zweiten aufeinanderfolgenden Schichten 310 entsprechend trainiert werden (z.B. unter Verwendung einer Gradienten-Rückpropagierung).

Anschließend an das Training kann für jedes maschinelle Lernmodelle eine jeweilige Leistungsfähigkeit ermittelt (z.B. evaluiert) werden und die Konfiguration des maschinellen Lernmodells mit der größten (ermittelten) Leistungsfähigkeit kann für das maschinelle Lernmodell, das beim Steuern des technischen Systems verwendet werden soll, ausgewählt. In manchen Aspekten kann das derart trainierte maschinelle Lernmodell direkt verwendet werden. In anderen Aspekten kann das derart trainierte maschinelle Lernmodell zusätzlich trainiert werden. In noch anderen Aspekten kann ein neues maschinelles Lernmodell mit der ermittelten Konfiguration initialisiert werden und anhand von entsprechenden Trainingsdaten trainiert werden, bevor dieses trainierte maschinelle Lernmodell zum Steuern des technischen Systems verwendet wird.

FIG.4 zeigt verschiedene Szenarien zur Konfigurationsauswahl (z.B. einer Suche nach einer neuronalen Architektur) eines für ein bestimmtes technisches System vorgesehenes maschinellen Lernmodells.

Die Diagramme 402, 404, 406 zeigen jeweils den zum Trainieren erforderlichen Speicheraufwand 408 und den Rechenaufwand (oder die Zeitdauer) 410, wobei die Buchstaben ein jeweiliges maschinelles Lernmodell mit zugehörigen neuronaler Architektur repräsentieren.

Diagramm 402 zeigt die Konfigurationsauswahl ohne den Multi-Genauigkeits-Leistungsfähigkeits-Schätzungsansatz, so dass jedes maschinelle Lernmodell der Vielzahl von maschinellen Lernmodellen bis zu einer vergleichsweise hohen Genauigkeit trainiert wird. Dies erfordert einen sehr hohen Rechenaufwand.

Diagramm 404 zeigt die Konfigurationsauswahl mittels Multi-Genauigkeits-Leistungsfähigkeits-Schätzungsansatz, so dass jedes maschinelle Lernmodell (A, B, C, D in diesem Beispiel) der Vielzahl von maschinellen Lernmodellen für eine bestimmte Zeitdauer bis zu einer vergleichsweise niedrigen Genauigkeit trainiert wird und anschließend nur ausgewählte maschinelle Lernmodelle (in diesem Beispiel B, C, D) weiter trainiert werden.

Diagramm 406 zeigt die Konfigurationsauswahl mittels Multi-Genauigkeits-Leistungsfähigkeits-Schätzungsansatz in Kombination mit teilweisen Einfrieren der Schichten eines jeweiligen maschinellen Lernmodells, wie hierin beschrieben. Anschaulich können dadurch aufgrund der zum Trainieren eines jeweiligen maschinellen Lernmodells verringerten Speicherressourcen mehrere maschinelle Lernmodell (z.B. A, B, C, D) gleichzeitig (mittels der gleichen GPU) trainiert werden. Dadurch kann der für die Konfigurationsauswahl erforderliche Gesamtaufwand verringert werden und/oder die Vielzahl von maschinellen Lernmodellen kann eine größere Anzahl an maschinellen Lernmodellen (also einen größeren Suchraum) aufweisen, welche mit unverändertem Rechenaufwand trainiert werden können.

Ein Verfahren zum Steuern eines technischen Systems (z. B. der Robotervorrichtung 101) kann ein Erfassen von Sensordaten, welche das technische System oder eine Umgebung dessen repräsentieren, aufweisen. Die Sensordaten können beispielsweise ein Bild aufweisen. Diese Sensordaten können in ein maschinelles Lernmodell, dessen Konfiguration mittels des Verfahrens 200 ausgewählt wurde, eingegeben werden und das technische System kann dann anhand einer Ausgabe des maschinellen Lernmodells gesteuert werden.

## Patentansprüche

1. Verfahren (200) zum Auswählen einer Konfiguration für ein maschinelles Lernmodell, das zum Steuern eines technischen Systems (100) verwendet werden soll, das Verfahren (200) aufweisend:
Bereitstellen (202) einer Vielzahl von maschinellen Lernmodellen, von denen jedes maschinelle Lernmodell eine von den anderen maschinellen Lernmodellen der Vielzahl von maschinellen Lernmodellen verschiedene Konfiguration aufweist und von denen jedes maschinelle Lernmodell eine jeweilige Vielzahl von aufeinanderfolgenden Schichten (304) mit ein oder mehreren ersten aufeinanderfolgenden Schichten (308) und mit auf die ein oder mehreren ersten aufeinanderfolgenden Schichten (308) folgenden ein oder mehreren zweiten aufeinanderfolgenden Schichten (310) aufweist;
Trainieren (204) eines jeden maschinellen Lernmodells der Vielzahl von maschinellen Lernmodellen unter Verwendung von Trainingsdaten, welche Sensordaten des technischen Systems (100) als Eingabedaten und zugehörige Grundwahrheitsdaten aufweisen, wobei beim Trainieren eines jeweiligen maschinellen Lernmodells der Vielzahl von maschinellen Lernmodellen mindestens ein lernbarer Modellparameter der ein oder mehreren ersten aufeinanderfolgenden Schichten (308) der jeweiligen Vielzahl von aufeinanderfolgenden Schichten (304) nicht adaptiert wird; und
Auswählen (206) der Konfiguration des trainierten maschinellen Lernmodells mit der größten Leistungsfähigkeit als Konfiguration für das maschinelle Lernmodell, das zum Steuern des technischen Systems verwendet werden soll.

2. Verfahren (200) gemäß Anspruch 1,
wobei beim Trainieren (204) der Vielzahl von maschinellen Lernmodellen mehrere maschinelle Lernmodelle der Vielzahl von maschinellen Lernmodellen gleichzeitig mittels eines Prozessors trainiert werden.

3. Verfahren (200) gemäß Anspruch 1 oder 2, ferner aufweisend:
nach dem Trainieren (204) eines jeden maschinellen Lernmodells der Vielzahl von maschinellen Lernmodellen, Auswählen mehrerer maschineller Lernmodelle der Vielzahl von maschinellen Lernmodellen, welche eine größere Leistungsfähigkeit als die anderen maschinellen Lernmodelle der Vielzahl von maschinellen Lernmodellen haben; und
zusätzliches Trainieren eines jeden maschinellen Lernmodells der mehreren maschinellen Lernmodelle.

4. Verfahren (200) gemäß einem der Ansprüche 1 bis 3,
vor dem Trainieren (204) des jeweiligen maschinellen Lernmodells, Quantisieren der ein oder mehreren ersten aufeinanderfolgenden Schichten des jeweiligen maschinellen Lernmodells.

5. Verfahren (200) gemäß einem der Ansprüche 1 bis 4,
wobei die ein oder mehreren zweiten aufeinanderfolgenden Schichten (310) der jeweiligen Vielzahl von aufeinanderfolgenden Schichten (304) ein oder mehrere aufeinanderfolgende Schichten aufweisen, von denen eine direkt auf eine letzte Schicht (304(N-K) der ein oder mehreren ersten aufeinanderfolgenden Schichten (308) folgt; und
wobei beim Trainieren (304) des jeweiligen maschinellen Lernmodells die ein oder mehreren aufeinanderfolgende Schichten unter Verwendung eines parameter-effizienten Feinabstimmungsverfahrens trainiert werden.

6. Verfahren (200) gemäß einem der Ansprüche 1 bis 5,
wobei sich die Konfiguration eines jeweiligen maschinellen Lernmodells von der Konfiguration der anderen maschinellen Lernmodelle der Vielzahl von maschinellen Lernmodellen bezüglich der neuronalen Architektur und/oder der Trainings-Hyperparameter unterscheidet.

7. Verfahren zum Steuern eines technischen System (100), das Verfahren aufweisend:
Erfassen von Sensordaten, welche das technische System (100) oder eine Umgebung dessen repräsentieren;
Eingeben der Sensordaten in ein maschinelles Lernmodell, dessen Konfiguration mittels des Verfahrens (200) gemäß einem der Ansprüche 1 bis 6 ausgewählt wurde, zum Ermitteln einer Ausgabe; und
Steuern des technischen System (100) unter Verwendung der Ausgabe.

8. Datenverarbeitungseinheit, die eingerichtet ist, das Verfahren gemäß einem der Ansprüche 1 bis 7 auszuführen.

9. Computerprogramm mit Befehlen, die, wenn sie durch einen Prozessor ausgeführt werden, bewirken, dass der Prozessor das Verfahren gemäß einem der Ansprüche 1 bis 7 durchführt.

10. Computerlesbares Medium, das Befehle speichert, die, wenn sie durch einen Prozessor ausgeführt werden, bewirken, dass der Prozessor das Verfahren gemäß einem der Ansprüche 1 bis 7 durchführt.

## Geänderte Patentansprüche

### Geänderte Patentansprüche gemäss Regel 137(2) EPÜ.

1. Computerimplementiertes Verfahren (200) zum Auswählen einer Konfiguration für ein maschinelles Lernmodell, das zum Steuern eines technischen Systems (100) verwendet werden soll, das Verfahren (200) aufweisend:
Bereitstellen (202) einer Vielzahl von maschinellen Lernmodellen, von denen jedes maschinelle Lernmodell eine von den anderen maschinellen Lernmodellen der Vielzahl von maschinellen Lernmodellen verschiedene Konfiguration aufweist und von denen jedes maschinelle Lernmodell eine jeweilige Vielzahl von aufeinanderfolgenden Schichten (304) mit ein oder mehreren ersten aufeinanderfolgenden Schichten (308), von denen eine vorderste Schicht (304(1)) eine Eingabe (302) des maschinellen Lernmodells empfängt, und mit auf die ein oder mehreren ersten aufeinanderfolgenden Schichten (308) direkt folgenden ein oder mehreren zweiten aufeinanderfolgenden Schichten (310), von denen eine letzte Schicht (304(N)) eine Ausgabe (306) des maschinellen Lernmodells ausgibt, aufweist;
Trainieren (204) eines jeden maschinellen Lernmodells der Vielzahl von maschinellen Lernmodellen unter Verwendung von Trainingsdaten, welche Sensordaten des technischen Systems (100) als Eingabedaten und zugehörige Grundwahrheitsdaten aufweisen, wobei beim Trainieren eines jeweiligen maschinellen Lernmodells der Vielzahl von maschinellen Lernmodellen die ein oder mehreren zweiten aufeinanderfolgenden Schichten (310) adaptiert werden und mindestens ein lernbarer Modellparameter jeder der ein oder mehreren ersten aufeinanderfolgenden Schichten (308) der jeweiligen Vielzahl von aufeinanderfolgenden Schichten (304) nicht adaptiert wird; und
Auswählen (206) der Konfiguration des trainierten maschinellen Lernmodells mit der größten Leistungsfähigkeit als Konfiguration für das maschinelle Lernmodell, das zum Steuern des technischen Systems verwendet werden soll.

2. Verfahren (200) gemäß Anspruch 1,
wobei beim Trainieren (204) der Vielzahl von maschinellen Lernmodellen mehrere maschinelle Lernmodelle der Vielzahl von maschinellen Lernmodellen gleichzeitig mittels eines Prozessors trainiert werden.

3. Verfahren (200) gemäß Anspruch 1 oder 2, ferner aufweisend:
nach dem Trainieren (204) eines jeden maschinellen Lernmodells der Vielzahl von maschinellen Lernmodellen, Auswählen mehrerer maschineller Lernmodelle der Vielzahl von maschinellen Lernmodellen, welche eine größere Leistungsfähigkeit als die anderen maschinellen Lernmodelle der Vielzahl von maschinellen Lernmodellen haben; und
zusätzliches Trainieren eines jeden maschinellen Lernmodells der mehreren maschinellen Lernmodelle.

4. Verfahren (200) gemäß einem der Ansprüche 1 bis 3,
vor dem Trainieren (204) des jeweiligen maschinellen Lernmodells, Quantisieren der ein oder mehreren ersten aufeinanderfolgenden Schichten des jeweiligen maschinellen Lernmodells.

5. Verfahren (200) gemäß einem der Ansprüche 1 bis 4,
wobei beim Trainieren (304) des jeweiligen maschinellen Lernmodells die ein oder mehreren aufeinanderfolgende Schichten unter Verwendung eines parametereffizienten Feinabstimmungsverfahrens trainiert werden.

6. Verfahren (200) gemäß einem der Ansprüche 1 bis 5,
wobei sich die Konfiguration eines jeweiligen maschinellen Lernmodells von der Konfiguration der anderen maschinellen Lernmodelle der Vielzahl von maschinellen Lernmodellen bezüglich der neuronalen Architektur und/oder der Trainings-Hyperparameter unterscheidet.

7. Verfahren zum Steuern eines technischen System (100), das Verfahren aufweisend:
Erfassen von Sensordaten, welche das technische System (100) oder eine Umgebung dessen repräsentieren;
Eingeben der Sensordaten in ein maschinelles Lernmodell, dessen Konfiguration mittels des Verfahrens (200) gemäß einem der Ansprüche 1 bis 6 ausgewählt wurde, zum Ermitteln einer Ausgabe; und
Steuern des technischen System (100) unter Verwendung der Ausgabe.

8. Datenverarbeitungseinheit, die eingerichtet ist, das Verfahren gemäß einem der Ansprüche 1 bis 7 auszuführen.

9. Computerprogramm mit Befehlen, die, wenn sie durch einen Prozessor ausgeführt werden, bewirken, dass der Prozessor das Verfahren gemäß einem der Ansprüche 1 bis 7 durchführt.

10. Computerlesbares Medium, das Befehle speichert, die, wenn sie durch einen Prozessor ausgeführt werden, bewirken, dass der Prozessor das Verfahren gemäß einem der Ansprüche 1 bis 7 durchführt.
